(19)

Europäisches
Patentamt
European
Patent Office
Office européen
des brevets

(11)　**EP 4 238 659 A1**

(12)　**EUROPEAN PATENT APPLICATION**
published in accordance with Art. 153(4) EPC

(43) Date of publication:
**06.09.2023　Bulletin 2023/36**

(21) Application number: **21886284.5**

(22) Date of filing: **27.10.2021**

(51) International Patent Classification (IPC):
*B05D 3/02* (2006.01)　　*B05D 3/12* (2006.01)
*B05D 7/24* (2006.01)　　*C09D 175/04* (2006.01)
*C09D 175/06* (2006.01)　*C09D 175/08* (2006.01)
*C08G 18/22* (2006.01)　　*C08G 18/42* (2006.01)
*C08G 18/44* (2006.01)　　*C08G 18/48* (2006.01)
*C08G 18/79* (2006.01)　　*C09D 7/63* (2018.01)

(52) Cooperative Patent Classification (CPC):
**B05D 3/02; B05D 3/12; B05D 7/24; C08G 18/22;
C08G 18/42; C08G 18/44; C08G 18/48;
C08G 18/79; C09D 7/63; C09D 175/04;
C09D 175/06; C09D 175/08**

(86) International application number:
**PCT/JP2021/039701**

(87) International publication number:
**WO 2022/092167 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:　**28.10.2020　JP 2020180762**

(71) Applicant: **Nippon Paint Automotive Coatings Co.,
Ltd.
Hirakata-shi, Osaka 573-1153 (JP)**

(72) Inventors:
• **KAWAI, Takashi
Hirakata-shi, Osaka 573-1153 (JP)**
• **JINNO, Nobusuke
Hirakata-shi, Osaka 573-1153 (JP)**

(74) Representative: **Mewburn Ellis LLP
Aurora Building
Counterslip
Bristol BS1 6BX (GB)**

(54)　**TWO-PACK TYPE COATING COMPOSITION AND METHOD FOR PRODUCING COATED ARTICLE**

(57)　Provided is a two-pack coating composition suitable for open press coating and suitable particularly for exterior applications. A two-pack coating composition comprising a main resin and a curing agent, wherein the main resin contains a polyol, a curing catalyst, and an ultraviolet absorber; the curing agent contains an isocyanurate compound; a hydroxyl value of the polyol is 250 mg KOH/g or more and 1000 mg KOH/g or less; an average number of hydroxy groups of the polyol is 3 or more; a content of the curing catalyst is 0.05 parts by mass or more and 3 parts by mass or less based on 100 parts by mass of the polyol; and a content of a solvent is 30% by mass or less.

EP 4 238 659 A1

**Description**

TECHNICAL FIELD

The present invention relates to a two-pack coating composition and a method for producing a coated article.

BACKGROUND ART

Coating films having various roles are formed on surfaces of industrial products and the like. By a coating film, an article to be coated is protected, and at the same time, a beautiful appearance and a superior design are imparted. Generally, a coating film is formed by spray-coating a coating composition containing a solvent such as an organic solvent and/or an aqueous solvent and then drying the coating composition. In recent years, however, scattering of a solvent during spray coating, emission of a solvent to the atmosphere in a drying step, and generation of $CO_2$, and the like are being recognized as problems. In addition, since spray coating needs a drying step, productivity tends to decrease.

Under such circumstances, as a coating method in place of spray coating, Patent Literature 1 proposes a method of forming a coating film by injecting a coating material into a mold and then pressing an applied surface in the mold.

CITATIONS LIST

PATENT LITERATURE

Patent Literature 1: WO 2010/113847 A

SUMMARY OF INVENTION

TECHNICAL PROBLEMS

On reflection, an object of the present invention is to provide a two-pack coating composition suitable for open press coating in which an applied surface is pressed in an open state. In particular, an object of the present invention is to provide a two-pack coating composition suitable for exterior applications and a method for producing a coated article using the same.

SOLUTIONS TO PROBLEMS

In order to solve the above-described problems, the present invention provides the following embodiments.

[1] A two-pack coating composition comprising a main resin and a curing agent, wherein

the main resin comprises a polyol, a curing catalyst, and an ultraviolet absorber,
the curing agent comprises an isocyanurate compound,
a hydroxyl value of the polyol is 250 mg KOH/g or more and 1000 mg KOH/g or less,
an average number of hydroxy groups of the polyol is 3 or more,
a content of the curing catalyst is 0.05 parts by mass or more and 3 parts by mass or less based on 100 parts by mass of the polyol, and
a content of a solvent is 30% by mass or less.

[2] The two-pack coating composition according to [1], wherein the isocyanurate compound comprises a trimer of hexamethylene diisocyanate.
[3] The two-pack coating composition according to [1] or [2], wherein the main resin further comprises a light stabilizer.
[4] The two-pack coating composition according to any one of [1] to [3], wherein the polyol is at least one selected from the group consisting of polyester polyol, polyether polyol, and polycarbonate polyol.
[5] The two-pack coating composition according to any one of [1] to [4], wherein a ratio of an isocyanate group equivalent of the isocyanurate compound to a hydroxy group equivalent of the polyol, NCO/OH, is 0.5/1 or more and 2/1 or less.
[6] The two-pack coating composition according to any one of [1] to [5], wherein the curing catalyst comprises at least one organometallic catalyst comprising a metal element selected from the group consisting of Bi, Zn, Al, Zr, and Sn.
[7] The two-pack coating composition according to any one of [1] to [6], which is to be used for exterior applications and for open press coating.

[8] A method for producing a coated article, the method comprising:

a step of preparing an article to be coated,
a step of applying the two-pack coating composition according to any one of [1] to [7] to the article, and
a step of forming a first coating film by pressing a surface of the article on which the two-pack coating composition has been applied with heating to cure the two-pack coating composition.

[9] The method for producing a coated article according to [8], wherein a thickness of the first coating film is 80 $\mu$m or more.

[10] A method for producing a coated article, the method comprising:

a step of preparing an article to be coated including a colored coating film,
a step of applying the two-pack coating composition according to any one of [1] to [7] to the colored coating film, and
a step of forming a second coating film by pressing a surface of the article on which the two-pack coating composition has been applied with heating to cure the two-pack coating composition.

[11] The method for producing a coated article according to [10], wherein a thickness of the second coating film is 80 $\mu$m or more.

ADVANTAGEOUS EFFECTS OF INVENTION

According to the present invention, it is possible to provide a two-pack coating composition suitable for open press coating and suitable particularly for exterior applications, and a method for producing a coated article using the two-pack coating composition.

BRIEF DESCRIPTION OF DRAWINGS

FIG. 1A is a cross-sectional view schematically illustrating a part of a coated article according to a first embodiment.
FIG. 1B is a cross-sectional view schematically illustrating a part of another coated article according to the first embodiment.
FIG. 2 is a cross-sectional view schematically illustrating a part of a coated article according to a second embodiment.
FIG. 3 is a flowchart showing a method for producing a coated article according to one embodiment of the present invention.
FIG. 4 is a flowchart showing a method for producing a coated article according to another embodiment of the present invention.

DESCRIPTION OF EMBODIMENTS

A coating material for exterior applications is a material of a coating film to be formed on an exterior body. Exterior bodies are coated articles to be mainly used outdoors. Exterior articles are required to have severe weatherability. For this, a light stabilizer and/or an ultraviolet absorber are usually blended in coating materials for exterior applications.
In order to enhance weatherability, the thickness of a coating film is also important. As the coating film is thicker, the weatherability is enhanced. Thus, attention was paid to open press coating by which a thick coating film can be formed. Open press coating is a method in which a coating material is applied to an object and then the applied surface is pressed in an open state to form a cured coating film. When the coating material contains a thermosetting resin, the pressing may be carried out simultaneously with the heating.
The two-pack coating composition according to the present embodiment comprises a main resin comprising a polyol, a curing catalyst, and an ultraviolet absorber, and a curing agent comprising an isocyanurate compound. The polyol has a hydroxyl value of 250 mg KOH/g or more and 1000 mg KOH/g or less, the polyol has an average number of hydroxy groups of 3 or more, the content of the curing catalyst is 0.05 parts by mass or more and 3 parts by mass or less based on 100 parts by mass of the polyol, and the content of the solvent is 30% by mass or less. The two-pack coating composition exhibits superior weatherability and water resistance, and is less likely to cause sagging and bubbles even when forming a thick coating film. For this reason, the two-pack coating composition according to the present embodiment is to be used for open press coating and is suitable especially for exterior applications.

It is noted that use of the two-pack coating composition according to the present embodiment in a coating method other than open press coating is not excluded.

The two-pack coating composition according to the present embodiment can be used, for example, as a material of a coating film (first coating film) disposed adjacent to an article to be coated and a coating film (second coating film) disposed adjacent to a colored coating film formed on an article to be coated.

[Two-pack coating composition]

The two-pack coating composition according to the present embodiment comprises a main resin and a curing agent. The main resin comprises a polyol, a curing catalyst, and an ultraviolet absorber. The curing agent comprises an isocyanurate compound. When the main resin and the curing agent are mixed, the polyol and the isocyanurate compound react with each other to afford a cured coating film. The main resin and/or the curing agent each may be heated and/or vacuum degassed before mixing. Thank to this, the amount of water contained in the two-pack coating composition obtained by mixing the two agents is reduced, and the appearance of a resulting coating film is likely to be improved.

(Main resin)

The main resin comprises a polyol, a curing catalyst, and an ultraviolet absorber. The polyol is a coating film forming resin. The polyol reacts with a curing agent through, for example, heating, and forms a three-dimensional cured coating film. Hereinafter, curable resins including the polyol contained in the two-pack coating composition are sometimes collectively referred to as coating film forming resins.

In the following, respective components are described in detail.

«Ultraviolet absorber»

The ultraviolet absorber (UVA) absorbs ultraviolet rays and prevents degradation of a coating film due to ultraviolet rays. Therefore, it is particularly suitably used for a coating material for a clear coating film.

Examples of the UVA include benzotriazole-based compounds, triazine-based compounds, benzophenone-based compounds, and benzoate-based compounds. Specifically, examples of the UVA include Tinuvin 326, Tinuvin 384-2, Tinuvin 900, Tinuvin 400, Tinuvin 405, Tinuvin 460, Tinuvin 477, and Tinuvin 479 (all manufactured by BASF).

The content (PHR: % by mass) of the UVA based on 100% by mass of the resin solid content of the coating composition is, for example, 0.2% by mass or more and 10% by mass or less. The PHR of the UVA is more preferably 1% by mass or more, and still more preferably 2% by mass or more. The PHR of the UVA is more preferably 7% by mass or less, and still more preferably 5% by mass or less.

<<Light stabilizer>>

A light stabilizer may be used together with the ultraviolet absorber. Thanks to this, the weatherability is readily further improved. The light stabilizer efficiently traps alkyl radicals (R·) and peroxy radicals (ROO·) generated by ultraviolet rays. Examples of the light stabilizer include a hindered amine-based compound (HALS) and a hindered phenol-based compound. Among them, HALS is preferable.

The structure of the HALS is not particularly limited. The HALS has, for example, one or more piperidine skeletons (typically, 2,2,6,6-tetraalkylpiperidine skeletons) in the molecule. Such HALSs are used singly or two or more of them are used in combination.

The nitrogen atom constituting the hindered amino group of a HALS (typically, a nitrogen atom in a piperidine skeleton) may be bonded to hydrogen (N-H type), or may be bonded to an alkyl group (N-R type), or may have an ether linkage (N-OR type), or may have a hydroxy group via an ether linkage (N-OR-OH type), or may be bonded to an acyl group (N-CO-R type). Among them, the hindered amino group is preferably of the N-OR type or the N-CO-R type.

The molecular weight of the light stabilizer is not particularly limited. In particular, the molecular weight of the light stabilizer is preferably 400 or more and 800 or less. Thank to this, the compatibility with the polyol is easily increased. In addition, elution or bleed-out of the light stabilizer from a coating film is likely to be controlled. The molecular weight of the light stabilizer is more preferably 410 or more, and still more preferably 420 or more. When the light stabilizer has no hydroxy group in the molecule, the molecular weight of the light stabilizer is more preferably 700 or less, and still more preferably 600 or less. A light stabilizer having a hydroxy group has high compatibility with the polyol even when the molecular weight thereof is relatively large. Therefore, the upper limit value of the molecular weight of the HALS having a hydroxy group may be 790, or may be 780.

Furthermore, the HALS having a hydroxy group is also preferable in that elution or bleed-out from a coating film hardly occurs. In general, a HALS having a large molecular weight is likely to be eluted or bleed out from a coating film. However, since the hydroxy group of the HALS having a hydroxy group can react with the curing agent, elution or bleed-out from a coating film is likely to be prevented even if the HALS has a relatively large molecular weight.

Specifically, examples of preferable HALS include HOSTAVIN (registered trademark) 3058 (manufactured by Clariant Chemicals Ltd., molecular weight: 449, N-CO-R type), Tinuvin (registered trademark) 123 (manufactured by BASF, molecular weight: 737, N-OR type), Tinuvin 152 (molecular weight: 757, N-OR type), and Tinuvin 5100.

Examples of preferable hindered phenol-based light stabilizer include Irganox 1010, Irganox 1035, Irganox 1076, Irganox 1135, Irganox 1726, Irganox 1035, Irganox 1076, Irganox 1135, and Irganox 1726 (all manufactured by BASF).

The content (PHR: % by mass) of the light stabilizer based on the resin solid content of the coating composition is preferably 0% by mass or more and less than 5% by mass. The PHR of the light stabilizer is more preferably 0.5% by mass or more, and still more preferably 1% by mass or more. The PHR of the light stabilizer is more preferably 4% by mass or less, and still more preferably 3% by mass or less. Among the light stabilizers, the neutral HALS accounts for preferably 50% by mass or more, and more preferably 70% by mass or more. The resin solid content of the coating composition is the total solid content of the coating film forming resin and the curing agent. The PHR is a ratio based on 100% by mass of the resin solid content.

«Polyol»

The polyol is a coating film forming resin. The polyol reacts with a curing agent through, for example, heating, and forms a three-dimensional cured coating film. The polyol has two or more hydroxy groups per molecule. In the present embodiment, the main resin comprises a polyol having 3 or more hydroxy groups on average per molecule. Thanks to this, a coating film with an increased hardness is obtained. Polyols are used singly or two or more of them are used in combination.

The main resin preferably comprises a polyol (A1) having three or more hydroxy groups per molecule and a polyol (A2) having two hydroxy groups per molecule. The ratio of the polyol (A1) to the polyol (A2) is not particularly limited. The proportion of the polyol (A2) may be 50% by mass or less, or may be 40% by mass or less, or may be 30% by mass or less of the total of the polyol (A1) and the polyol (A2).

The polyol has a hydroxyl value of 250 mg KOH/g or more and 1000 mg KOH/g or less. When the hydroxyl value of the polyol is within the above range, a large rate of the reaction between the polyol and the isocyanate compound is offered when the main resin and the curing agent are mixed. For this, coated articles can be quickly released from a mold, so that the productivity is improved. In addition, the adhesion of a coating film especially to a resin article to be coated is likely to be improved because a certain degree of reaction heat is generated during the reaction.

When two or more polyols are contained, the apparent hydroxyl value calculated based on the hydroxyl values and the mass ratios of the respective polyols is just required to be 250 mg KOH/g or more and 1000 mg KOH/g or less. In other words, the main resin may comprise a polyol having a hydroxyl value of less than 250 mg KOH/g and/or a polyol having a hydroxyl value of more than 1000 mg KOH/g.

The hydroxyl value of the polyol (including the apparent hydroxyl value the same applies hereinafter) is preferably 350 mg KOH/g or more, and more preferably 500 mg KOH/g or more. The hydroxyl value of the polyol is preferably 800 mg KOH/g or less, and more preferably 700 mg KOH/g or less.

The type of the polyol is not particularly limited. Examples of the polyol include polyester polyol, polyether polyol, polycarbonate polyol, polyacrylate polyol and polyhydric alcohol. These are used singly or two or more of them are used in combination. Among them, the polyol preferably comprises at least one selected from the group consisting of polyester polyol, polyether polyol, and polycarbonate polyol.

The polyester polyol preferably has a branched structure. The polyester having a branched structure is prepared, for example, by reacting two or more polyvalent carboxylic acids with a trivalent or more polyhydric alcohol compound, and, as necessary, repeating this reaction.

Examples of commercially available products of the polyester polyol include DESMOPHEN VPLS2249/1 (manufactured by Sumika Covestro Urethane Co., Ltd.), DESMOPHEN 800 (manufactured by Sumika Covestro Urethane Co., Ltd.), Desmophen XP2488 (manufactured by Sumika Covestro Urethane Co., Ltd.), KURARAY POLYOL P-510 (manufactured by Kuraray Co., Ltd.), and KURARAY POLYOL F-510 (manufactured by Kuraray Co., Ltd.).

Examples of the polyether polyol include polyethylene glycol, polypropylene glycol, polytetramethylene glycol, and block bodies thereof. The polyether polyol may be prepared by adding ethylene oxide and/or propylene oxide to a polyhydric alcohol compound. According to the above procedure, a polyether polyol in which the number of OH functional groups per molecule is 2, 3, or more can be prepared.

Examples of commercially available products of the polyether polyol include the SANNIX series manufactured by Sanyo Chemical Industries, Ltd. Specifically, SANNIX GP-250, SANNIX GP-400, SANNIX PP-200, and SANNIX GP-600 are included.

The polycarbonate polyol can be prepared, for example, by reacting dimethyl carbonate with a polyhydric polyol.

Examples of commercially available products of the polycarbonate polyol include DURANOL T5650E (manufactured by Asahi Kasei Corporation), C-590 (manufactured by Kuraray Co., Ltd.), and ETERNACOLL PH-50 (manufactured by Ube Industries, Ltd.).

Examples of the polyhydric alcohol include ethylene glycol, glycerin, trimethylolpropane, propylene glycol, tetramethylene glycol, and pentaerythritol.

The weight average molecular weight (Mw) of the polyol is not particularly limited. The Mw of the polyol may be appropriately set according to the hydroxyl value or the like.

The main resin may comprise a coating film forming resin other than the polyol. Examples of the coating film forming resin include acrylic resin, polyester resin, alkyd resin, polyether resin, polyolefin resin, polyurethane resin, polycarbonate resin, melamine resin, epoxy resin, and carbodiimide resin. Other coating film forming resins are used singly or two or more of them are used in combination.

«Curing catalyst»

The curing catalyst accelerates a curing reaction. The curing catalyst is not particularly limited. From the viewpoint of the accelerating effect, the curing catalyst is preferably, for example, at least one of organometallic catalysts comprising a metal element selected from the group consisting of Bi, Zn, Al, Zr, and Sn.

Examples of the organometallic catalyst comprising Bi include bismuth carboxylic acid and salts thereof. Examples of the organometallic catalyst comprising Zn include zinc complex catalysts. Examples of the organometallic catalyst comprising Al include aluminum complex catalysts. Examples of the organometallic catalyst comprising Zr include zirconium chelate catalysts. Examples of the organometallic catalyst comprising Sn include dialkyltin dicarboxylates such as dibutyltin dilaurate, dioctyltin dilaurate, and dibutyltin diacetate; tin oxide compounds such as dibutyltin oxide; and tin carboxylates such as tin 2-ethylhexanoate.

Examples of commercially available products of the organometallic catalyst comprising Bi include K-KAT 348 (manufactured by Kusumoto Chemicals, Ltd.) and K-KAT XK-640 (manufactured by Kusumoto Chemicals, Ltd.). Examples of commercially available products of the organometallic catalyst comprising Zr include K-KAT 4205, K-KAT XC-9213, K-KAT XC-A209, and K-KAT 6212 (all manufactured by Kusumoto Chemicals, Ltd.). Examples of a commercially available products of the organometallic catalyst comprising Al include K-KAT 5218 (manufactured by Kusumoto Chemicals, Ltd.). Examples of commercially available products of the organometallic catalyst comprising Zn include K-KAT XK-314, K-KAT XK-635, K-KAT XK-639, and K-KAT XK-620 (all manufactured by Kusumoto Chemicals, Ltd.). Examples of commercially available products of the organometallic catalyst comprising Sn include TVS TIN LAU (manufactured by Nitto Kasei Co., Ltd.).

The content of the curing catalyst is, for example, 0.05 parts by mass or more and 3 parts by mass or less based on 100 parts by mass of the coating film forming resin. Thanks to this, a curing reaction of the coating film forming resin rapidly proceeds. Accordingly, a coating film superior in appearance and physical properties is obtained by open press coating. The content of the curing catalyst is preferably 0.07 parts by mass or more, and more preferably 0.1 parts by mass or more based on 100 parts by mass of the coating film forming resin. The content of the curing catalyst is preferably 1 part by mass or less, and more preferably 0.7 parts by mass or less based on 100 parts by mass of the coating film forming resin.

(Curing agent)

The coating film forming resin such as polyol is crosslinked by the curing agent, and a resulting coating film has improved corrosion resistance and durability.

The curing agent comprises an isocyanurate compound. The isocyanurate compound is a trimer of an isocyanate compound and has a ring structure. By the isocyanurate compound, the curability of the polyol is further improved and the weatherability is improved.

The isocyanate compound is not particularly limited, and those publicly known as a curing agent for two-pack reactive compositions are used. Examples of such an isocyanate compound include aromatic diisocyanates such as tolylene diisocyanate (TDI), 4,4'-diphenylmethane diisocyanate (MDI), xylylene diisocyanate (XDI), and meta-xylylene diisocyanate (MXDI); aliphatic diisocyanates such as hexamethylene diisocyanate (HDI), tetramethylene diisocyanate, 2-methyl-pentane -1,5-diisocyanate, 3-methyl-pentane -1,5-diisocyanate, lysine diisocyanate, and trioxyethylene diisocyanate; and alicyclic diisocyanates such as isophorone diisocyanate (IPDI), cyclohexyl diisocyanate, 4,4'-dicyclohexylmethane diisocyanate, norbornane diisocyanate, hydrogenated tolylene diisocyanate, hydrogenated xylene diisocyanate, and hydrogenated tetramethyl xylene diisocyanate. These may be used singly or two or more of them may be used in combination.

Among them, aliphatic diisocyanates are preferable, and HDI is more preferable from the viewpoint of relatively low viscosity. Trimers of these isocyanates are particularly highly reactive with polyols. For this, the two-pack coating composition is more suitably used for open press coating.

The ratio of the isocyanate group equivalent of the isocyanate compound to the hydroxy group equivalent of the polyol, NCO equivalent/OH equivalent, is preferably 0.5/1 or more and 2/1 or less, and more preferably 0.9/1 or more and 1.2/1 or less. When the equivalent ratio is within the above range, the coating composition has high curability, and is suitably used especially for open press coating.

The curing agent may contain a curing agent other than the isocyanurate compound. Examples of the other curing agent include an amino resin, a monomer or dimer of the isocyanate compound, a biuret body of the isocyanate compound, a blocked product of the isocyanate compound, an epoxy compound, an aziridine compound, a carbodiimide compound, and an oxazoline compound. These are used singly or two or more of them are used in combination.

The content of the curing agent is, for example, 35% by mass or more and 90% by mass or less of the resin solid content of the coating composition. The content of the curing agent is preferably 45% by mass or more, and more preferably 55% by mass or more. The content of the curing agent is preferably 85% by mass or less, and more preferably 70% by mass or less.

(Solvent)

The content of the solvent is 30% by mass or less. Thanks to this, a cured coating film is rapidly obtained. Accordingly, a coating film superior in appearance and physical properties is obtained by open press coating. The content of the solvent is preferably 10% by mass or less, and may be 0%.

The solvent is not particularly limited. The solvent is usually an organic solvent. Examples of the organic solvent include

ester-based solvents such as ethyl acetate, butyl acetate, isopropyl acetate, ethylene glycol monoethyl ether acetate, propylene glycol monomethyl ether acetate, and propylene glycol monoethyl ether acetate; ether-based solvents such as propylene glycol monomethyl ether, ethylene glycol monomethyl ether, methylmethoxybutanol, ethoxypropanol, ethylene glycol isopropyl ether, ethylene glycol-t-butyl ether, ethylene glycol monoethyl ether, ethylene glycol monobutyl ether, methoxybutanol, and propylene glycol monobutyl ether; alcohol-based solvents such as methanol, ethanol, butanol, and propyl alcohol; ketone-based solvents such as acetone, methyl ethyl ketone, and methyl isobutyl ketone; aliphatic hydrocarbon-based solvents such as Swasol, ShellSol, and Mineral Spirit; and aromatic solvents such as xylene, toluene, Solvesso-100 (S-100), and Solvesso-150 (S-150). These are used singly or two or more of them are used in combination.

<<Pigment>>

The main resin may comprise a pigment. Examples of the pigment include coloring pigments, glitter, and extender pigments. Pigments may be used singly or two or more of them may be used in combination.

Examples of the glitter include metal flakes (aluminum, chromium, gold, silver, copper, brass, titanium, nickel, nickel chromium, stainless steel, and the like), metal oxide flakes, pearl pigments, glass flakes coated with metal or metal oxide, silica flakes coated with metal oxide, graphite, hologram pigments, and cholesteric liquid crystal polymers. These are used singly or two or more of them are used in combination.

Examples of the coloring pigment include organic coloring pigments such as azo chelate pigments, insoluble azo pigments, condensed azo pigments, diketopyrrolopyrrole-based pigments, benzimidazolone-based pigments, phthalocyanine-based pigments, indigo pigments, perinone-based pigments, perylene-based pigments, dioxane-based pigments, quinacridone-based pigments, isoindolinone-based pigments, and metal complex pigments; and inorganic coloring pigments such as chrome yellow, yellow iron oxide, red iron oxide, carbon black, and titanium dioxide. These are used singly or two or more of them are used in combination.

Examples of the extender pigment include calcium carbonate, barium sulfate, clay, and talc. These are used singly or two or more of them are used in combination.

The content of the pigment is not particularly limited. The content of the pigment may be appropriately set according to the type, purpose, and the like. For example, the main resin for a coating film for which transparency is required may comprise a pigment as long as transparency is not impaired. In the main resin for a coating film for which transparency is required, the addition amount of the pigment is, for example, 10 parts by mass or less based on 100 parts by mass of the solid content of the coating film forming resin, and may be 0.01 parts by mass or more and 5 parts by mass or less. In a main resin for an opaque coating film, the addition amount of the pigment may be, for example, more than 10 parts by mass based on 100 parts by mass of the solid content of the coating film forming resin.

<<Viscosity modifier>>

The main resin may comprise a viscosity modifier. Examples of the viscosity modifier include an amide-based viscosity modifier, an inorganic viscosity agent, a cellulose derivative, and a urethane associative viscosity modifier. These are used singly or two or more of them are used in combination.

Examples of the polyamide-based viscosity modifier include fatty acid amides, polyamides, acrylic amides, long-chain polyaminoamides, aminoamides, and salts thereof (e.g., phosphates).

Examples of the inorganic viscosity modifier include layered silicates (silicate minerals), halogenated minerals, oxidized minerals, carbonate minerals, borate minerals, sulfate minerals, molybdate minerals, tungstate minerals, phosphate minerals, arsenate minerals, and vanadate minerals.

Examples of the cellulose derivative include cellulose acetate butyrate, nitrocellulose, cellulose acetate, and cellulose acetate propionate.

The urethane associative viscosity modifier is not particularly limited. Examples of the urethane associative viscosity modifier includes a polyurethane-based viscosity modifier having a hydrophobic chain in the molecule and a urethane-urea-based viscosity modifier in which at least a part of the main chain is a hydrophobic urethane chain.

(Others)

The two-pack coating composition may comprise other components, as necessary. Examples of such other components include additives that can be usually used in the coating field and the coating material field. Specifically, examples thereof include various pigments, surface conditioning agents, viscosity modifiers, antioxidants, ultraviolet inhibitors, antifoaming agents, catalyst aids, rust inhibitors, sedimentation inhibitors, and dispersants. These additives may be added to the main resin or may be added to the curing agent. The amount of the additives is not particularly limited, and may be appropriately set, as necessary.

[Coated article]

(First embodiment)

A coated article according to a first embodiment comprises an article to be coated and a first coating film formed on the article. The first coating film is formed of the two-pack coating composition. In addition, the first coating film is formed by open press coating. The first coating film preferably has a thickness of 80 $\mu$m or more. The article to be coated preferably comprises a fiber-reinforced resin substrate.

The first coating film can function as a clear coating film, a primer coating film, a so-called intermediate coating film, and a base coating film. The first coating film may have transparency or may be opaque.

To have transparency specifically means that the total light transmittance is 80% or more. The total light transmittance of transparent coating films is preferably 90% or more. To be opaque specifically means that the total light transmittance is less than 80%. The total light transmittance can be measured by a method in accordance with JIS K 7361-1. Transparent coating films may be either colorless or colored.

On the first coating film, another coating film may further be formed. The other coating film is, for example, at least one selected from the group consisting of an intermediate coating film, a base coating film, and a clear coating film. The other coating film is formed by a method other than open press coating (typically, spray coating) using a coating material other than the two-pack coating composition.

(Second Embodiment)

A coated article according to a second embodiment comprises an article to be coated, a colored coating film formed on the article, and a second coating film formed on the colored coating film. The second coating film is formed of the two-pack coating composition. In addition, the second coating film is formed by open press coating. The second coating film preferably has a thickness of 80 $\mu$m or more.

The second coating film can function as a top clear coating film. The second coating film preferably has transparency.

The colored coating film includes a so-called intermediate coating film and a base coating film. The colored coating film is formed by a method other than open press coating (typically, spray coating) using a coating material other than the two-pack coating composition.

(First and second coating films)

The first and second coating films each have, for example, a thickness of 80 $\mu$m or more. Thanks to this, the weatherability of a coated article is readily further improved. When the two-pack coating composition according to the present embodiment is used, even such a thick coating film can be formed while preventing sagging and bubbles.

Furthermore, even if a surface of an article to be coated has irregularities such as those of a fiber-reinforced resin (FRP) or a surface of a colored coating film has irregularities due to a coloring pigment, these irregularities are less likely to appear on the surfaces of the first and second coating films. Accordingly, a pattern of a pressing member can be accurately transferred to the surfaces of the first and second coating films formed by open press coating. For example, when the pressing surface of the pressing member is a mirror surface, smooth and glossy first and second coating films can be obtained. The thicknesses of the first and second coating films are more preferably 85 $\mu$m or more, and still more preferably 150 $\mu$m or more. The thicknesses of the first and second coating films may be 1000 $\mu$m or less.

The thicknesses of the first and second coating films are calculated, for example, as follows. First, each coating film is cut together with the article to be coated with a graver or the like. Further, a section having a perpendicular cross section is obtained from the cut sample with a scalpel or a microtome. This section is observed with a video microscope (for example, VHX-6000, manufactured by Keyence Corporation), and the thickness of the coating film at arbitrary five points is measured. Finally, these measurements are averaged, and the average is defined as the thickness of the coating film. The thicknesses of other coating films are also measured and calculated in the same method.

(Article to be coated)

The article to be coated is not particularly limited. The article to be coated may be made of, for example, metal, resin, or glass.

Examples of the metal material constituting a metallic article to be coated include iron, copper, aluminum, tin, zinc, and alloys thereof.

The metallic article to be coated may have been subjected to surface treatment. Examples of the surface treatment include phosphate salt treatment, chromate treatment, zirconium chemical conversion treatment, and composite oxide treatment. The metallic article to be coated may have been further coated with an electrodeposition coating material after the surface treatment. The electrodeposition coating material may be of a cationic type or of an anionic type.

The resin constituting the resin article to be coated may be either a thermoplastic resin or a thermosetting resin. Examples of the resin include polypropylene (PP) resin, acrylonitrile-butadiene-styrene copolymer (ABS resin), polycarbonate (PC)/ABS resin, PC/acrylonitrile-ethylene-propylene-diene-styrene copolymer (AES resin), AES resin, PC/polybutylene terephthalate (PBT) resin, PC/polyethylene terephthalate (PET) resin, PC resin, polymethyl methacrylate (PMMA) resin, polyvinyl chloride (PVC resin), acrylonitrile-styrene-acrylic (ASA) resin, epoxy resin, and phenol resin.

From the viewpoint of designability, the resin article to be coated may be a fiber-reinforced resin (FRP) substrate containing a fiber together with a resin. Examples of the fiber contained in the FRP substrate include carbon fiber and glass fiber. When the two-pack coating composition according to the present embodiment is used, a thick coating film can be formed, so that irregularities of the FRP substrate can be hidden. From the viewpoint of designability, a fiber-reinforced resin (CFRP) substrate containing carbon fiber is particularly preferable.

The resin article to be coated preferably has been subjected to degreasing treatment. The resin article to be coated may have been further coated with a primer coating material after the degreasing treatment. The primer coating material is not particularly limited, and may be appropriately chosen according to the type of the coating material to be applied thereon.

(Colored coating film)

The colored coating film may be a single layer or a laminated coating film having two or more layers. The colored coating film may be a so-called intermediate coating film having one layer or two or more layers, may be a so-called base coating film having one layer or two or more layers, and may be a combination thereof.

«Base coating film»

The base coating film is formed of, for example, a base coating composition comprising a coating film forming resin, a curing agent, a viscosity modifier, a diluent component, and a pigment. The base coating composition may comprise various additives, as necessary. The components contained in the respective base coating films may be either the same or different.

Examples of the coating film forming resin, the curing agent, the viscosity modifier, the diluent component, and the pigment include the respective components recited as examples of those to be blended in the two-pack coating composition. The diluent component may be water.

The thickness of the base coating film is not particularly limited, and is appropriately set according to the purpose. The thickness per layer of the base coating film may be, for example, 15 $\mu$m or more and 50 $\mu$m or less. The thickness per layer of the base coating film is preferably 18 $\mu$m or more, and more preferably 20 $\mu$m or more. The thickness per layer of the base coating film is preferably 45 $\mu$m or less, and more preferably 40 $\mu$m or less.

«Intermediate coating film»

The intermediate coating film is usually interposed between an article to be coated and a base coating film. The intermediate coating film makes the coating surface uniform, and the unevenness of the base coating film is easily controlled.

The intermediate coating film is formed of, for example, an intermediate coating composition comprising a coating film forming resin, a curing agent, a viscosity modifier, a diluent component, and a pigment. The intermediate coating composition may comprise various additives, as necessary.

Examples of the coating film forming resin, the curing agent, the viscosity modifier, the diluent component, and the pigment include the respective components recited as examples of those to be blended in the two-pack coating composition. The diluent component may be water.

The thickness of the intermediate coating film is not particularly limited. From the viewpoint of the appearance and chipping resistance of the coated article, the thickness of the intermediate coating film is preferably 10 $\mu$m or more and 40 $\mu$m or less. The thickness of the intermediate coating film is more preferably 15 $\mu$m or more. The thickness of the intermediate coating film is more preferably 30 $\mu$m or less.

«Clear coating film»

The clear coating film protects a lower coating film and imparts a glossy texture or a matte texture to a coated article. The clear coating film is not particularly limited, and has the same configuration as that of a conventionally known clear coating film. The clear coating film is formed of, for example, a clear coating composition comprising a coating film forming resin, a curing agent, a viscosity modifier, a diluent component, and a pigment. The clear coating composition may comprise various additives, as necessary.

Examples of the coating film forming resin, the curing agent, the viscosity modifier, the diluent component, and the pigment include the respective components recited as examples of those to be blended in the two-pack coating composition. The diluent component may be water.

The thickness of the clear coating film is not particularly limited. From the viewpoint of scratch resistance, the thickness of the clear coating film is preferably 10 $\mu$m or more, and more preferably 15 $\mu$m or more. From the viewpoint of designability, the thickness of the clear coating film may be 50 $\mu$m or less, and may be 40 $\mu$m or less.

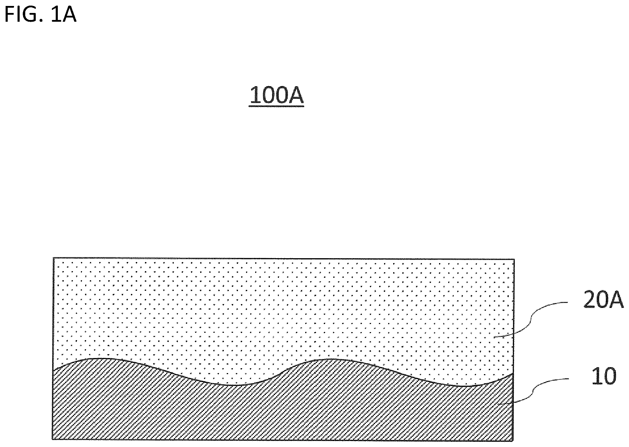

FIG. 1A is a cross-sectional view schematically illustrating a part of a coated article according to the first embodiment. The coated article 100A includes an article to be coated 10 and a first coating film 20A. The article to be coated 10 includes, for example, a CFRP substrate, and irregularities derived from carbon fibers are formed on the surface thereof. On the other hand, the irregularities do not appear on the surface of the first coating film 20A, so that the surface of the coated article 100A is smooth.

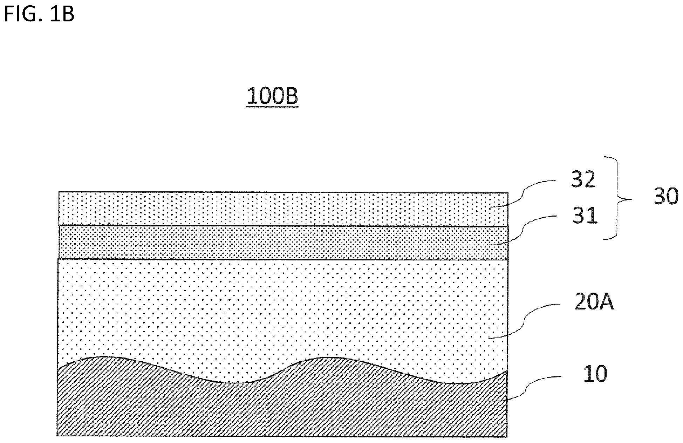

FIG. 1B is a cross-sectional view schematically illustrating a part of another coated article according to the first embodiment. The coated article 100B includes an article to be coated 10, a first coating film 20A, and another coating film 30 formed on the first coating film 20A. The other coating film 30 includes a base coating film 31 and a clear coating film 32. The article to be coated 10 includes, for example, a CFRP substrate, and irregularities derived from carbon fibers are formed on the surface thereof. On the other hand, the irregularities do not appear on the surfaces of the first coating film 20A and the other coating film 30, so that the surface of the coated article 100A is smooth.

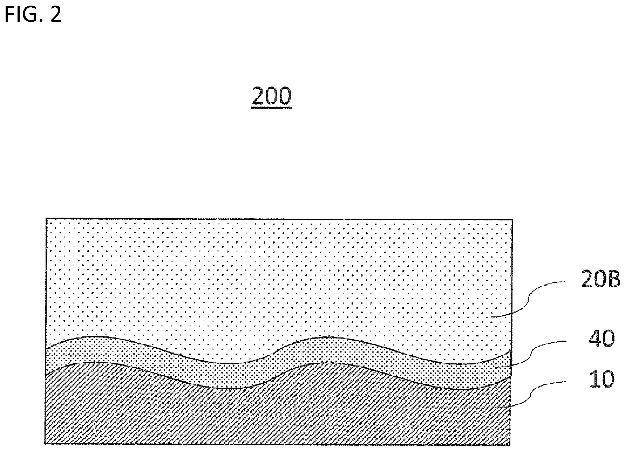

FIG. 2 is a cross-sectional view schematically illustrating a part of a coated article according to the second embodiment. The coated article 200 includes an article to be coated 10, a colored coating film 40, and a second coating film 20B. The article to be coated 10 includes, for example, a CFRP substrate, and irregularities derived from carbon fibers are formed on the surfaces of the article to be coated 10 and the colored coating film 40. On the other hand, the irregularities do not appear on the surface of the second coating film 20B, so that the surface of the coated article 200 is smooth.

[Method for producing coated article]

A coated article according to the first embodiment is produced by a method comprising a step of preparing an article to be coated, a step of applying the two-pack coating composition to the article, and a step of pressing the applied surface of the article while heating, thereby curing the two-pack coating composition to form a first coating film.

A coated article according to the second embodiment is produced by a method comprising a step of preparing an article to be coated including a colored coating film, a step of applying the two-pack coating composition to the colored coating film, and a step of pressing the applied surface of the article while heating, thereby curing the two-pack coating composition to form a second coating film.

The step of applying the two-pack coating composition and the step of pressing the applied surface of the article to be coated while heating, thereby forming a coating film are collectively referred to as open press coating. Open press coating is suitable especially for application to an FRP substrate.

In the following, a method for producing a coated article according to the first embodiment is described.

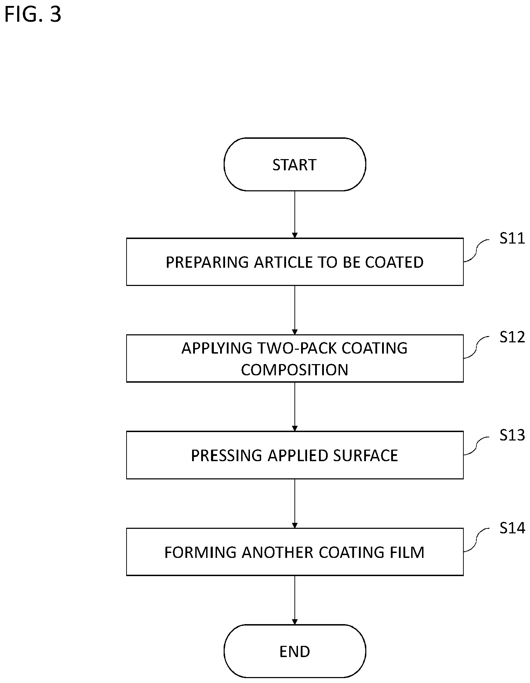

FIG. 3 is a flowchart showing a method for producing a coated article according to the first embodiment.

(1) Step of preparing article to be coated (S11)

First, an article to be coated, which is a subject of coating, is prepared. The details of the article to be coated are as described above.

(II) Step of applying two-pack coating composition to article to be coated (S12)

The application method is not particularly limited. Examples of the application method include a dip coating method, an air knife coating method, a curtain coating method, a roller coating method, a bar coating method (for example, a wire bar coating method), a die coating method, a gravure coating method, and a doctor blade method.

The application amount of the two-pack coating composition is not particularly limited. The two-pack coating composition is applied such that the first coating film (the coating layer after curing) has a thickness of 80 $\mu$m or more.

From the viewpoint of handleability, the viscosity of the two-pack coating composition is preferably 100 mPa·s or more and 500 mPa·s or less. Such a viscosity can be suitably adjusted by using the two-pack coating composition described above. If necessary, the viscosity may be adjusted to fall within the above range by heating the main resin and/or the curing agent of the two-pack coating composition.

After the two-pack coating composition is applied, preliminary drying may be carried out. Conditions for the preliminary drying are not particularly limited. Examples of the preliminary drying include a method in which the item to be dried is left standing for 15 minutes or more and 30 minutes or less under a temperature condition of 20°C or more and 25°C or less, and a method in which the item to be dried is heated for 30 seconds or more and 10 minutes or less under a temperature condition of 50°C or more and 100°C or less.

(III) Step of pressing applied surface (S13)

The applied surface of the article to be coated is pressed while being heated. Through this, the two-pack coating composition is cured to afford a first coating film.

By open press coating, it is possible to form a first coating film which is thick with prevented sagging or bubbles. For this, even when the coating composition is applied to an article having irregularities on the surface thereof like an FRP, the irregularities are less likely to appear on the applied surface. Accordingly, a pattern of a pressing member can be accurately transferred to the surface of the first coating film formed by open press coating. In addition, since the amount of the solvent contained in the two-pack coating composition is small, a drying step for removing the solvent is not required, so that productivity is improved.

The method for heating the applied surface is not particularly limited. For example, heating can be carried out by pressing the applied surface with a heated pressing member. The heating conditions are appropriately set according to the composition and the like of each coating material. The heating temperature is, for example, 80°C or more and 180°C or less, and may be 120°C or more and 160°C or less. The heating time may be appropriately set according to the heating temperature. When the heating temperature is 120°C or more and 160°C or less, the heating time is, for example, 1 minute or more and 30 minutes or less, and may be 5 minutes or more and 20 minutes or less. The pressing condition is not particularly limited.

(IV) Step of forming another coating film on the first coating film (S14)

On the first coating film, another coating film may be formed. The other coating film is, for example, at least one selected from the group consisting of an intermediate coating film, a base coating film, and a clear coating film. From the viewpoint of productivity, adhesion, and water resistance, it is preferable that a plurality of other coating films are laminated without being cured, and then heated to simultaneously cure the plurality of uncured coating films.

(IV-1) Step of forming uncured intermediate coating film

The uncured intermediate coating film is formed by applying an intermediate coating material containing the intermediate coating composition.

The coating method is not particularly limited. Examples of the coating method include air spray coating, airless spray coating, rotary atomization coating, and curtain coating. These methods may be combined with electrostatic coating. Among them, rotary atomization type electrostatic coating is preferable from the viewpoint of coating efficiency.

For the rotary atomization type electrostatic coating, for example, a rotary atomization type electrostatic coating machine commonly called "micro bell ($\mu\mu$ bell)", "micro bell ($\mu$ bell)", "metallic bell", or the like is used.

The application amount of the intermediate coating material is not particularly limited. The intermediate coating material is applied, for example, such that the thickness of the intermediate coating film after curing is 10 $\mu$m or more and 40 $\mu$m or less.

After the intermediate coating material is applied, preliminary drying (also referred to as preheating) may be carried out. Thanks to this, the diluent component contained in the intermediate coating material is inhibited from bumping in the curing step, so that the occurrence of bubbles is easily prevented. Further, the preliminary drying suppresses the mixing of an uncured intermediate coating film and a coating material to be applied thereto, so that it becomes difficult to form a mixed phase. Therefore, the appearance of a resulting coated article is likely to be improved.

Conditions for the preliminary drying are not particularly limited. Examples of the preliminary drying include a method in which the item to be dried is left standing for 15 minutes or more and 30 minutes or less under a temperature condition of 20°C or more and 25°C or less, and a method in which the item to be dried is heated for 30 seconds or more and 10 minutes or less under a temperature condition of 50°C or more and 100°C or less.

(Intermediate coating material)

The intermediate coating material comprises the intermediate coating composition described above. The intermediate coating material may be prepared by further diluting the intermediate coating composition with a diluent component. The intermediate coating material may be either a one-pack coating material or a multi-pack coating material such as a two-pack coating material.

The viscosity of the intermediate coating material is not particularly limited. The viscosity of the intermediate coating material measured with a B-type viscometer at 20°C is, for example, 500 cps/6 rpm or more and 6000 cps/6 rpm or less.

The solid component content of the intermediate coating material is not particularly limited. The solid component content of the intermediate coating material is preferably 30% by mass or more and 70% by mass or less. The solid content of the intermediate coating material refers to all components of the intermediate coating material excluding the diluent component.

(IV-2) Step of forming uncured base coating film

The uncured base coating film is formed by applying a base coating material comprising the base coating composition described above.

The coating method is not particularly limited. Examples of the coating method include the same methods as the coating method of the intermediate coating material. Among them, rotary atomization type electrostatic coating is preferable from the viewpoint of coating efficiency.

The application amount of the base coating material is not particularly limited. The base coating material is applied, for example, such that the thickness of the base coating film after curing is 15 $\mu$m or more and 50 $\mu$m or less.

After the base coating material is applied, preliminary drying may be carried out. The conditions for the preliminary drying are not particularly limited, and may be the same as those for the preliminary drying of the intermediate coating material.

(Base coating material)

The base coating material comprises the base coating composition described above. The base coating material may be prepared by further diluting the base coating composition with a diluent component. The base coating material may be either a one-pack coating material or a multi-pack coating material such as a two-pack coating material.

The viscosity of the base coating material is not particularly limited. The viscosity of the base coating material measured with a B-type viscometer at 20°C is, for example, 500 cps/6 rpm or more and 6000 cps/6 rpm or less.

The solid component ratio of the base coating material is not particularly limited. The solid component ratio of the base coating material is preferably 30% by mass or more and 70% by mass or less. The solid content of the base coating material refers to all components of the base coating material excluding the diluent component.

(IV-3) Step of forming uncured clear coating film

The uncured clear coating film is formed by applying a clear coating material comprising the clear coating composition described above.

The coating method is not particularly limited. Examples of the coating method include the same methods as the coating method of the intermediate coating material. Among them, rotary atomization type electrostatic coating is preferable from the viewpoint of coating efficiency.

The application amount of the clear coating material is not particularly limited. The clear coating material is applied, for example, such that the thickness of the clear coating film after curing is 25 $\mu$m or more and 45 $\mu$m or less.

(Clear coating material)

The clear coating material comprises the clear coating composition described above. The clear coating material may be prepared by further diluting the clear coating composition with a diluent component. The clear coating material may be a powder, a water-based, or a solvent-based.

The viscosity of the clear coating material is not particularly limited. The viscosity of the clear coating material measured with a B-type viscometer at 20°C is, for example, 500 cps/6 rpm or more and 6000 cps/6 rpm or less.

The solid content of the clear coating material is not particularly limited. The solid content of the clear coating material is, for example, 40% by mass or more and 60% by mass or less. The solid content of the clear coating material refers to all components of the clear coating material excluding the diluent component.

(IV-4) Curing step

At least one selected from the group consisting of an uncured intermediate coating film, a base coating film, and a clear coating film is cured. The curing is carried out by heating.

The heating conditions are appropriately set according to the composition and the like of the respective coating films. The heating temperature is, for example, 70°C or more and 150°C or less, and may be 80°C or more and 140°C or less. The heating time is, for example, 10 minutes or more and 40 minutes or less, and may be 20 minutes or more and 30 minutes or less. Examples of a heating device include drying furnaces such as a hot air oven, an electric oven, and an infrared induction heating oven.

Next, a method for producing a coated article according to the second embodiment will be described.

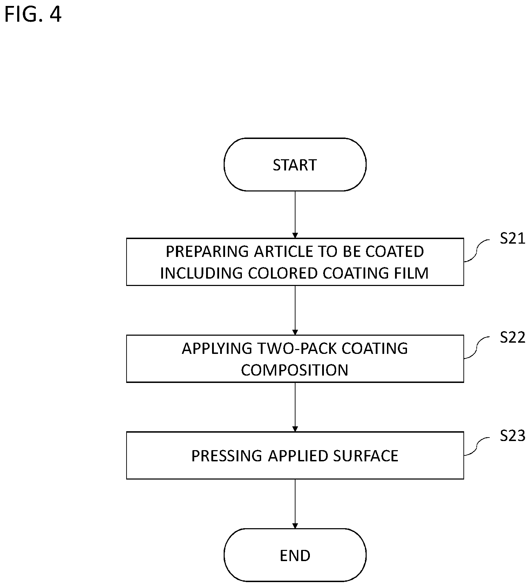

FIG. 4 is a flowchart showing a method for producing a coated article according to the second embodiment.

(I) Step of preparing article to be coated including colored coating film (S21)

The article to be coated includes a colored coating film. The colored coating film is formed by, for example, a method comprising a step of applying an intermediate coating material to an article to be coated to form an uncured intermediate coating film, a step of applying a base coating material to form an uncured base coating film, and a step of curing both the uncured coating films as described above. Both the coating films may be cured together with the two-pack coating composition.

(II) Step of applying two-pack coating composition to colored coating film (S22)

The two-pack coating composition is applied to the colored coating film by the same method as in the first embodiment. The application of the two-pack coating composition to the colored coating film may be carried out to an uncured colored coating film or may be carried out to a cured colored coating film.

(III) Step of pressing applied surface (S23)

By the same method as in the first embodiment, the applied surface of the article to be coated is pressed while being heated. As a result, the two-pack coating composition is cured to afford a second coating film.

The first and second coating films formed of the two-pack coating composition have superior weatherability, designability, and water resistance. For this, the resulting coated article is suitably used for, for example, an exterior article of an automobile and building applications. In particular, the resulting coated article is suitably used for automobile parts such as spoilers, pillars, bumpers, mirror covers, grilles, and doorknobs.

EXAMPLES

The present invention will be described hereafter in more detail by way of examples, to which the present invention is not intended to be limited. In the examples, "parts" and "%" are on a mass basis unless otherwise indicated.

[Example 1]

(1) Preparation of two-pack coating composition

A main resin was prepared by mixing 100 parts of a polyol (SANNIX GP-250, manufactured by Sanyo Chemical Industries, Ltd., hydroxyl value: 670 mg KOH/g, average number of hydroxy groups: 3), a UVA (Tinuvin 384-2, manufactured by BASF, benzotriazole-based compound), a UVA (Tinuvin 400, manufactured by BASF, triazine-based compound), a HALS (HOSTAVIN 3058, manufactured by Clariant Chemicals Ltd., molecular weight: 449, N-CO-R type), and 0.3 parts (active ingredient amount) of a curing catalyst (K-KAT XK-640, manufactured by Kusumoto Chemicals, Ltd., organometallic catalyst containing Bi). In the table, the amounts of the respective UVAs and HALSs are expressed as a proportion (PHR: % by mass) based on 100% by mass of the resin solid content (polyol and curing agent).
Separately, 218 parts of an isocyanurate compound (DESMODUR N3600, manufactured by Sumika Covestro Urethane Co., Ltd., a nurate body of HDI) was prepared as a curing agent.
NCO/OH = 1.0/1.0 and the solvent content as a two-pack coating composition was 0%.

(2) Preparation of coated article

A CFRP plate (epoxy resin) was prepared as an article to be coated. A masking tape (thickness: 100 $\mu$m) as a spacer was stuck on the article to be coated. The main resin and the curing agent of the two-pack coating composition obtained were mixed. The two-pack coating composition was applied to the article to be coated by a doctor blade method. Then, the applied surface was pressed for 5 minutes with a pressing member heated to 80°C to afford a first coating film having a thickness corresponding to the spacer (100 $\mu$m). In this way, a coated article was obtained.

[Examples 2 to 16 and Comparative Examples 1 to 12]

(1) Preparation of two-pack coating composition

Main resins and curing agents were prepared by the same procedure as in Example 1 except that the type and amount of each component were changed as shown in Tables 1 to 3.
In Examples 10 to 12 and Comparative Examples 7 to 10, ethyl acetate as an organic solvent was mixed with the main resin. In Tables 1 to 3, the solvent amount is expressed as a ratio relative to the two-pack coating composition.

(2) Preparation of coated article

Coated articles were obtained in the same method as in Example 1 using the two-pack coating compositions obtained in Examples 2 to 15 and Comparative Examples 1 to 7, 11, and 12.
The two-pack coating compositions obtained in Comparative Examples 8 to 10 were electrostatically applied to CFRP plates with a cartridge bell (rotary atomizing coater manufactured by ABB Industries), affording coated articles. The thickness of the first coating film is as shown in Tables 1 to 3.
In Example 16, a coated article was obtained in the same method as in Example 1 except that a CFRP plate having a base coating film (thickness: 20 $\mu$m) was used as an article to be coated. The base coating film was formed by electrostatically applying a base coating material containing a coloring pigment using a cartridge bell (rotary atomizing coater manufactured by ABB Industries).
The components in the above tables are as follows.

(Polyol)

SANNIX GP-400: manufactured by Sanyo Chemical Industries, Ltd., polyether polyol, hydroxyl value: 400 mg KOH/g, average number of hydroxy groups: 3.
SANNIX GP-600: manufactured by Sanyo Chemical Industries, Ltd., polyether polyol, hydroxyl value: 280 mg KOH/g, average number of hydroxy groups: 3.
SANNIX GP-1000: manufactured by Sanyo Chemical Industries, Ltd., polyether polyol, hydroxyl value: 160 mg KOH/g, average number of hydroxy groups: 3.
DESMOPHEN VPLS2249/1: manufactured by Sumika Covestro Urethane Co., Ltd., polyester polyol, hydroxyl value: 512 mg KOH/g, average number of hydroxy groups: 3 or more.
DESMOPHEN XP2488: manufactured by Sumika Covestro Urethane Co., Ltd., polyester polyol, hydroxyl value: 528 mg KOH/g, average number of hydroxy groups: 3 or more.
SANNIX PP-200: manufactured by Sanyo Chemical Industries, Ltd., polyether polyol, hydroxyl value: 560 mg KOH/g, average number of hydroxy groups: 2.

SANNIX PP-600: manufactured by Sanyo Chemical Industries, Ltd., polyether polyol: hydroxyl value: 187 mg KOH/g, average number of hydroxy groups: 2.

(Curing catalyst)

TVS TIN LAU: manufactured by Nitto Kasei Co., Ltd., organometallic catalyst containing Sn.

(Curing agent)

DURANATE 24A-100: manufactured by Asahi Kasei Corporation, biuret body of HDI.
DESMODUR N3400: manufactured by Sumika Covestro Urethane Co., Ltd., dimer of HDI.
Using the two-pack coating compositions and the coated articles prepared in Examples and Comparative Examples, the following evaluations were carried out. The results of the evaluations are shown in Tables 1 to 3.

(1) Workability

A curing agent was added to a main resin prepared. After the addition of the curing agent, the mixture was mixed for 15 seconds, and a sample was then taken out. The time when the sample was taken out was defined as a coating operation time start: 0 seconds, and the sample taken out was stirred with a spatula. The time required for the sample to reach a state in which it does not immediately drop due to the loss of fluidity caused by the curing reaction of the base and curing agents was measured as a coating operation time, and was evaluated according to the following criteria.

(Evaluation criteria)

Good: The coating operation time is 60 seconds or more and less than 600 seconds.
Fair: The coating operation time is 30 seconds or more and less than 60 seconds, or 600 seconds or more and less than 900 seconds.
Poor: The coating operation time is less than 30 seconds, or 900 seconds or more.

(2) Sagging property of uncured coating film

(2-1) Preparation of coating film by open press coating

A curing agent was added to a main resin prepared. After the addition of the curing agent, the mixture was mixed with a spatula for 15 seconds. The resulting coating composition was applied to an ABS plate with a doctor blade (film thickness: 100 μm).

(2-2) Preparation of coating film by spray coating

A curing agent was added to a main resin prepared. After the addition of the curing agent, the mixture was mixed with a spatula for 15 seconds. The resulting coating composition was applied to an ABS plate by air spraying (film thickness: 100 μm).

(2-3) Evaluation of sagging property of coating film

Each of the coated ABS plates obtained in (2-1) and (2-2) was left at rest at 23°C for 10 minutes and then vertically leaned. After 5 minutes, it was observed whether the coating material had sagged on the grounding surface, and evaluation was carried out according to the following criteria.

(Evaluation criteria)

Good: The coating material had not sagged on the grounding surface.
Poor: The coating material had sagged on the grounding surface.

(3) Weatherability

Coated articles were subjected to an accelerated weatherability test for 800 hours in accordance with JIS B 7753 using a Sunshine Weather Meter S80 (sunshine carbon arc accelerated weathering tester, manufactured by Suga Test Instruments Co., Ltd.). The 60° gloss values of the coating film before and after the test were measured with a gloss meter GN-268 Plus (manufactured by Konica Minolta, Inc.), and a gloss retention was calculated using the following formula. The gloss retention calculated was evaluated according to the following criteria.

$$\text{Gloss retention} = 100 \times \{(60° \text{ gloss value before test}) - (60° \text{ gloss value after test})\}/(60° \text{ gloss value before test})$$

(Evaluation criteria)

Good: Gloss retention is 80% or more.
Fair: Gloss retention is 60% or more and less than 80%.
Poor: Gloss retention is less than 60%.

(4) Water resistance

A test plate obtained in the same method as described above was immersed in a water tank maintained at 40°C for 240 hours. Thereafter, the test plate was lifted from the water and dried at normal temperature for 1 hour. Then, 10 slits were made in each of the longitudinal and lateral directions at an interval of 1 mm with a utility knife on the coating film of the test plate, and CELLOTAPE (registered trademark in Japan) (manufactured by Nichiban Co., Ltd.) was attached thereon and then peeled off. Of the 100 squares, the number of squares in which the coating film remained was counted. The larger the number of squares in which the coating film remains, the better the adhesion after the water resistance test and the higher the water resistance. The number of the counted squares was evaluated according to the following criteria.

(Evaluation criteria)

Good: The number of the counted squares is 81 or more.
Fair: The number of the counted squares is 60 or more and 80 or less.
Poor: The number of the counted squares is 59 or less.

[Table 1]

| | | (Hydroxyl value) | (Number of hydroxy groups) | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Main resin | Polyol | | | | | | | | | | | | |
| | SANNIX GP-250 | 670 | 3 | 100 | | | | | | | | | |
| | SANNIX GP-400 | 400 | 3 | | | | 100 | | 75 | 100 | 100 | 100 | 100 |
| | SANNIX GP-600 | 280 | 3 | | | | | 100 | | | | | |
| | SANNIX GP-1000 | 160 | 3 | | | | | | | | | | |
| | DESMOPHEN VPLS2249/1 | 512 | 3 or more | | | 100 | | | | | | | |
| | DESMOPHEN XP2488 | 528 | 3 or more | | 100 | | | | | | | | |
| | SANNIX PP-200 | 560 | 2 | | | | | | | | | | |
| | SANNIX PP-600 | 187 | 2 | | | | | | | | | | |
| | Ethylene glycol | 1809 | 2 | | | | | | 25 | | | | |
| Curing catalyst | K-KAT XK-640 | | | 0.3 | 0.3 | 0.3 | 0.3 | 0.3 | 0.3 | 0.3 | 0.3 | 0.3 | 0.3 |
| | TVS Tin LAU | | | | | | | | | | | | |
| UVA (PHR: % by mass) | Tinuvin 384-2 | | | 1 | 1 | 1 | 1 | 1 | 1 | 1 | 2 | | 1 |
| | Tinuvin 400 | | | 1 | 1 | 1 | 1 | 1 | 1 | 1 | | 2 | 1 |
| HALS (PHR: % by mass) | HOSTAVIN 3058 | | | 1 | 1 | 1 | 1 | 1 | 1 | | 1 | 1 | 1 |

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Curing agent | | (Type) | | | | | | | | | | |
| | DESMODUR N3600 | Nurate | 218 | 172 | 167 | 130 | 91 | 311 | 218 | 218 | 218 | 218 |
| | DURANATE 24A-100 | Biuret | | | | | | | | | | |
| | DESMODUR N3400 | Dimer | | | | | | | | | | |
| Solvent | Ethyl acetate (% by mass) | | | | | | | | | | | 10 |
| First coating film | Application method | | Press | Press | Press | Press | Press | Press | Press | Press | Press | Press |
| | Film thickness ($\mu$m) | | 100 | 100 | 100 | 100 | 100 | 100 | 100 | 100 | 100 | 100 |
| Second coating film | Application method | | | | | | | | | | | |
| | Film thickness ($\mu$m) | | | | | | | | | | | |
| Evaluation | (1) Workability | | Good | Good | Good | Good | Good | Good | Good | Good | Good | Good |
| | (2) Sagging property of uncured coating film | | Good | Good | Good | Good | Good | Good | Good | Good | Good | Good |
| | (3) Weatherability | | Good | Good | Good | Fair | Fair | Good | Good | Good | Good | Good |
| | (4) Water resistance | | Good | Good | Good | Good | Good | Good | Good | Good | Good | Good |

EP 4 238 659 A1

[Table 2]

| Main resin | | | (Hydroxyl value) | (Number of hydroxy groups) | Example 11 | Example 12 | Example 13 | Example 14 | Example 15 | Example 16 |
|---|---|---|---|---|---|---|---|---|---|---|
| | Polyol | SANNIX GP-250 | 670 | 3 | 100 | 100 | 100 | 100 | 100 | 100 |
| | | SANNIX GP-400 | 400 | 3 | | | | | | |
| | | SANNIX GP-600 | 280 | 3 | | | | | | |
| | | SANNIX GP-1000 | 160 | 3 | | | | | | |
| | | DESMOPHEN VPLS2249/1 | 512 | 3 or more | | | | | | |
| | | DESMOPHEN XP2488 | 528 | 3 or more | | | | | | |
| | | SANNIX PP-200 | 560 | 2 | | | | | | |
| | | SANNIX PP-600 | 187 | 2 | | | | | | |
| | | Ethylene glycol | 1809 | 2 | | | | | | |
| | Curing catalyst | K-KAT XK-640 | | | 0.3 | 0.3 | 0.3 | | 3 | 0.3 |
| | | TVS Tin LAU | | | | | | 0.15 | | |
| | UVA (PHR: % by mass) | Tinuvin 384-2 | | | 1 | 1 | 1 | 1 | I | 1 |
| | | Tinuvin 400 | | | 1 | 1 | 1 | 1 | 1 | 1 |
| | HALS (PHR: % by mass) | HOSTAVIN 3058 | | | 1 | 1 | 1 | 1 | 1 | 1 |
| Curing agent | | | | (Type) | | | | | | |
| | | DESMODUR N3600 | | Nurate | 218 | 218 | 218 | 218 | 218 | 218 |
| | | DURANATE 24A-100 | | Biuret | | | | | | |
| | | DESMODUR N3400 | | Dimer | | | | | | |
| Solvent | | | Ethyl acetate (% by mass) | | 20 | 30 | | | | |

EP 4 238 659 A1

| | | | Example | Example | Example | Example | Example | Example |
|---|---|---|---|---|---|---|---|---|
| | | | 11 | 12 | 13 | 14 | 15 | 16 |
| First coating film | | Application method | Press | Press | Press | Press | Press | |
| | | Film thickness (µm) | 100 | 100 | 80 | 100 | 100 | |
| Second coating film | | Application method | | | | | | Press |
| | | Film thickness (µm) | | | | | | 100 |
| Evaluation | | (1) Workability | Fair | Fair | Good | Fair | Good | Good |
| | | (2) Sagging property of uncured coating film | Good | Good | Good | Good | Good | Good |
| | | (3) Weatherability | Good | Good | Good | Good | Good | Good |
| | | (4) Water resistance | Good | Good | Good | Good | Good | Good |

[Table 3]

| | | | (Hydroxyl value) | (Number of hydroxy groups) | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|---|---|---|
| Main resin | Polyol | SANNIX GP-250 | 670 | 3 | | | | 100 | 100 | 100 | 100 | 100 | 100 | 100 | 100 | 100 |
| | | SANNIX GP-400 | 400 | 3 | | | | | | | | | | | | |
| | | SANNIX GP-600 | 280 | 3 | | | | | | | | | | | | |
| | | SANNIX GP-1000 | 160 | 3 | | 100 | | | | | | | | | | |
| | | DESMOPHEN VPLS2249/1 | 512 | 3 or more | | | | | | | | | | | | |
| | | Desmophen XP2488 | 528 | 3 or more | | | | | | | | | | | | |
| | | SANNIX PP-200 | 560 | 2 | | | 100 | | | | | | | | | |
| | | SANNIX PP-600 | 187 | 2 | 100 | | | | | | | | | | | |
| | | Ethylene glycol | 1809 | 2 | | | | | | | | | | | | |

(continued)

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|---|
| Curing catalyst | K-KAT XK-640 | | 0.3 | 0.3 | 0.3 | 0.3 | 0.3 | 0.3 | 0.3 | 0.3 | 0.3 | 0.3 | | 4 |
| | TVS Tin LAU | | | | | | | | | | | | 0.01 | |
| UVA (PHR: % by mass) | Tinuvin 384-2 | | 1 | 1 | 1 | 1 | 1 | | 1 | 1 | 1 | 1 | 1 | 1 |
| | Tinuvin 400 | | 1 | 1 | I | 1 | 1 | | 1 | 1 | 1 | 1 | 1 | 1 |
| HALS (PHR: % by mass) | HOSTAVIN 3058 | | 1 | 1 | 1 | 1 | 1 | 1 | 1 | 1 | 1 | 1 | 1 | 1 |
| Curing agent | | (Type) | | | | | | | | | | | | |
| | DESMODUR N3600 | Nurate | 91 | 52 | 182 | | | 218 | 218 | 218 | 218 | 218 | 218 | 218 |
| | DURANATE 24A-100 | Biuret | | | | | 223 | | | | | | | |
| | DESMODUR N3400 | Dimer | | | | | 207 | | | | | | | |
| Solvent | Ethyl acetate (% by mass) | | | | | | | | | 40 | 145 | 145 | 145 | | |
| First coating film | Application method | | Press | Press | Press | Press | Press | Press | Press | Spray | Spray | Spray | Press | Press |
| | Film thickness (μm) | | 100 | 100 | 100 | 100 | 100 | 100 | 100 | 100 | 50 | 30 | 100 | 100 |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| Evaluation | (1) Workability | Good | Good | Good | Good | Good | Good | Poor | - | - | - | Poor | Poor |
| | (2) Sagging property of uncured coating film | Good | Good | Good | Good | Good | Good | Poor | Poor | Poor | Good | Good | Good |
| | (3) Weatherability | Poor | Poor | Poor | Poor | Poor | Poor | Fair | Good | Poor | Poor | Good | Good |
| | (4) Water resistance | Poor | Poor | Good | Good | Good | Good | Good | Good | Good | Good | Good | Good |

**EP 4 238 659 A1**

INDUSTRIAL APPLICABILITY

The two-pack coating composition of the present invention can be suitably used in a coating method different from the conventional spray coating, such as open press coating. The two-pack coating composition of the present invention is suitable especially for exterior applications because the coating composition can afford coating films superior in weatherability and water resistance.

This application claims priority based on Japanese Patent Application No. 2020-180762, which was filed in Japan on October 28, 2020, the disclosure of which application is incorporated herein by reference in its entirety.

REFERENCE SIGNS LIST

| 100A, 100B, 200 | Coated article |
| 10 | Article to be coated |
| 20A | First coating film |
| 20B | Second coating film |
| 30 | Other coating films |
| | 31 Base coating film |
| | 32 Clear coating film |
| 40 | Colored coating film |

**Claims**

1. A two-pack coating composition comprising a main resin and a curing agent, wherein

   the main resin comprises a polyol, a curing catalyst, and an ultraviolet absorber,
   the curing agent comprises an isocyanurate compound,
   a hydroxyl value of the polyol is 250 mg KOH/g or more and 1000 mg KOH/g or less,
   an average number of hydroxy groups of the polyol is 3 or more,
   a content of the curing catalyst is 0.05 parts by mass or more and 3 parts by mass or less based on 100 parts by mass of the polyol, and
   a content of a solvent is 30% by mass or less.

2. The two-pack coating composition according to claim 1, wherein the isocyanurate compound comprises a trimer of hexamethylene diisocyanate.

3. The two-pack coating composition according to claim 1 or 2, wherein the main resin further comprises a light stabilizer.

4. The two-pack coating composition according to any one of claims 1 to 3, wherein the polyol is at least one selected from the group consisting of polyester polyol, polyether polyol, and polycarbonate polyol.

5. The two-pack coating composition according to any one of claims 1 to 4, wherein a ratio of an isocyanate group equivalent of the isocyanurate compound to a hydroxy group equivalent of the polyol, NCO/OH, is 0.5/1 or more and 2/1 or less.

6. The two-pack coating composition according to any one of claims 1 to 5, wherein the curing catalyst comprises at least one organometallic catalyst comprising a metal element selected from the group consisting of Bi, Zn, Al, Zr, and Sn.

7. The two-pack coating composition according to any one of claims 1 to 6, which is to be used for exterior applications and for open press coating.

8. A method for producing a coated article, the method comprising:

   a step of preparing an article to be coated,
   a step of applying the two-pack coating composition according to any one of claims 1 to 7 to the article to be

24

coated, and

a step of forming a first coating film by pressing a surface of the article on which the two-pack coating composition has been applied with heating to cure the two-pack coating composition.

9. The method for producing a coated article according to claim 8, wherein a thickness of the first coating film is 80 μm or more.

10. A method for producing a coated article, the method comprising:

a step of preparing an article to be coated including a colored coating film,

a step of applying the two-pack coating composition according to any one of claims 1 to 7 to the colored coating film, and

a step of forming a second coating film by pressing a surface of the article on which the two-pack coating composition has been applied with heating to cure the two-pack coating composition.

11. The method for producing a coated article according to claim 10, wherein a thickness of the second coating film is 80 μm or more.

FIG. 1A

100A

20A

10

FIG. 1B

<u>100B</u>

FIG. 2

200

20B

40

10

FIG. 3

```
        ┌─────────────┐
        │    START    │
        └──────┬──────┘
               │
   ┌───────────▼────────────────┐  S11
   │ PREPARING ARTICLE TO BE    │
   │        COATED              │
   └───────────┬────────────────┘
               │
   ┌───────────▼────────────────┐  S12
   │ APPLYING TWO-PACK COATING  │
   │       COMPOSITION          │
   └───────────┬────────────────┘
               │
   ┌───────────▼────────────────┐  S13
   │   PRESSING APPLIED SURFACE │
   └───────────┬────────────────┘
               │
   ┌───────────▼────────────────┐  S14
   │ FORMING ANOTHER COATING    │
   │         FILM               │
   └───────────┬────────────────┘
               │
        ┌──────▼──────┐
        │     END     │
        └─────────────┘
```

FIG. 4

```
                    ┌─────────────┐
                    │    START    │
                    └──────┬──────┘
                           │
                           ▼
        ┌──────────────────────────────────────┐      S21
        │   PREPARING ARTICLE TO BE COATED      │ ⌐
        │   INCLUDING COLORED COATING FILM      │
        └──────────────────┬───────────────────┘
                           │
                           ▼
        ┌──────────────────────────────────────┐      S22
        │      APPLYING TWO-PACK COATING        │ ⌐
        │            COMPOSITION                │
        └──────────────────┬───────────────────┘
                           │
                           ▼
        ┌──────────────────────────────────────┐      S23
        │        PRESSING APPLIED SURFACE       │ ⌐
        └──────────────────┬───────────────────┘
                           │
                           ▼
                    ┌─────────────┐
                    │     END     │
                    └─────────────┘
```

## INTERNATIONAL SEARCH REPORT

| | International application No. |
|---|---|
| | **PCT/JP2021/039701** |

**A. CLASSIFICATION OF SUBJECT MATTER**

*B05D 3/02*(2006.01)i; *B05D 3/12*(2006.01)i; *B05D 7/24*(2006.01)i; *C09D 175/04*(2006.01)i; *C09D 175/06*(2006.01)i; *C09D 175/08*(2006.01)i; *C08G 18/22*(2006.01)i; *C08G 18/42*(2006.01)i; *C08G 18/44*(2006.01)i; *C08G 18/48*(2006.01)i; *C08G 18/79*(2006.01)i; *C09D 7/63*(2018.01)i
FI: C09D175/04; C09D175/06; C09D175/08; C09D7/63; B05D7/24 301U; B05D3/12 C; B05D3/02 Z; B05D7/24 303A; B05D7/24 302T; B05D7/24 302V; B05D7/24 302R; B05D7/24 303E; C08G18/22; C08G18/42; C08G18/44; C08G18/48; C08G18/79 010

According to International Patent Classification (IPC) or to both national classification and IPC

**B. FIELDS SEARCHED**

Minimum documentation searched (classification system followed by classification symbols)

B05D3/02; B05D3/12; B05D7/24; C09D175/04; C09D175/06; C09D175/08; C08G18/22; C08G18/42; C08G18/44; C08G18/48; C08G18/79; C09D7/63

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-193705 A (KANSAI PAINT CO., LTD.) 26 October 2017 (2017-10-26) claims 1, 3-4, paragraphs [0021]-[0079], [0089], [0148], [0149], [0153], [0155], example 37 | 1-7 |
| Y | | 1-11 |
| Y | JP 2017-534477 A (COVESTRO LLC.) 24 November 2017 (2017-11-24) claims 1, 4-5, 8, paragraphs [0028], [0051], [0066], [0074], [0075], examples | 1-11 |
| A | JP 2004-359958 A (BAYER MATERIALSCIENCE AG) 24 December 2004 (2004-12-24) claims 1, 7 | 1-11 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 January 2022** | **18 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/039701**

| Patent document cited in search report | | | Publication date (day/month/year) | Patent family member(s) | | | Publication date (day/month/year) |
|---|---|---|---|---|---|---|---|
| JP | 2017-193705 | A | 26 October 2017 | CN | 107298932 | A | |
| JP | 2017-534477 | A | 24 November 2017 | US | 2017/0274564 | A1 | |
| | | | | claims 1, 4-5, 8, paragraphs [0033], [0044], examples | | | |
| | | | | WO | 2016/028568 | A1 | |
| | | | | EP | 3183283 | A1 | |
| | | | | KR | 10-2017-0051416 | A | |
| | | | | CN | 106661174 | A | |
| JP | 2004-359958 | A | 24 December 2004 | US | 2004/0249108 | A1 | |
| | | | | claims 1, 7 | | | |
| | | | | EP | 1484350 | A2 | |
| | | | | KR | 10-2004-0110988 | A | |
| | | | | CN | 1572850 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010113847 A
- JP 2020180762 A